# FASCICULE DE BREVET EUROPEEN

(11) **EP 0 824 469 B1**
(45) Date de publication et mention de la délivrance du brevet: **02.01.2003**
(21) Numéro de dépôt: 97906245.2
(22) Date de dépôt: 21.02.1997
(51) Int. Cl.: B65D 47/20

(54) **TETE ET ENSEMBLE DE DISTRIBUTION DE PRODUIT DE CONSISTANCE LIQUIDE, COMPORTANT UN REDUCTEUR D'ECOULEMENT ET PROCEDE DE FABRICATION D'UNE TELLE TETE**
MIT EINEM ABSPERRVENTIL VERSEHENER AUSGABEKOPF UND VORRICHTUNG ZUR AUSGABE EINES FLÜSSIGEN PRODUKTES SOWIE VERFAHREN ZUR HERSTELLUNG EINES SOLCHEN KOPFES
HEAD AND ASSEMBLY FOR DISPENSING A MATERIAL WITH A LIQUID CONSISTENCY, COMPRISING A FLOW REDUCER AND PROCEDURE OF PRODUCING SUCH A HEAD

(30) Priorité: 29.02.1996 FR 9602560
(43) Date de publication de la demande: 25.02.1998
(73) Titulaire: L'OREAL, 75008 Paris (FR)
(72) Inventeur: BAUDIN, Gilles, F-95330 Domont (FR); DE NERVO, Stanislas, Tokyo 151 (JP); ALBISETTI, Nicolas, F-93270 Sevran (FR)
(74) Mandataire: Boulard, Denis
(86) Numéro de dépôt international: FR9700328
(87) Numéro de publication internationale: WO97031837

(56) Documents cités:
- EP-A- 0 330 785
- EP-A- 0 395 380
- EP-A- 0 442 379
- DE-A- 3 347 079
- GB-A- 773 761
- US-A- 4 749 108
- US-A- 5 115 950

## Description

L'invention se rapporte à une tête de distribution selon le préambule de la revendication 1 et à un procédé de fabrication d'une telle tête selon le préambule de la revendication 22, ainsi qu'à un ensemble de distribution équipé de cette tête de distribution selon le préambule de la revendication 18.

Cette dernière est destinée, plus particulièrement, à équiper un réservoir contenant un produit et à permettre la distribution de ce produit dans de bonnes conditions. Ce produit peut être, notamment, un produit cosmétique, dermatologique ou alimentaire, tel que par exemple un shampooing, un gel moussant pour la douche, un gel coiffant, un savon liquide, une crème faciale, une lotion corporelle, un fond de teint liquide ou bien un produit ménager ou une colle liquide.

En particulier, l'invention vise un ensemble de distribution du genre de ceux qui comprennent un réservoir semi-rigide ou souple équipé d'une tête de distribution rigide ou semi-rigide pourvue d'un orifice de distribution élastiquement déformable.

Ainsi, on connaît, par le document EP-A-0 395 380, par exemple selon les figures 6 et 7, un tube de produit liquide équipé d'une tête de distribution qui comporte une capsule pourvue d'un orifice de sortie de produit fermé par une membrane élastique rapportée sur une partie rigide de la capsule, membrane dans laquelle est pratiquée une fente. Des moyens de fixation maintiennent la membrane sur la tête de distribution. Selon ce document, la fente élastique assure une étanchéité du tube vis-à-vis de l'extérieur, la fermeture de la fente s'effectuant automatiquement. Lorsque l'utilisateur exerce une pression sur la paroi latérale du tube, les bords de la fente s'écartent sous la poussée du produit et se referment lorsque cesse la poussée du produit. Les bords de la fente sont jointifs ce qui rend superflu la fermeture de l'orifice de sortie par un bouchon. Généralement la réalisation de fentes jointives est obtenue par découpe mécanique de la membrane à l'aide d'un outil tranchant.

Cependant, ce tube présente des inconvénients, soit à l'utilisation, soit à la fabrication. En effet, pour faire sortir une dose de produit par pression sur le tube, l'utilisateur doit appuyer fortement au départ pour provoquer l'ouverture de la fente ; le début de distribution s'effectue ensuite, de façon brusque. De ce fait, à la surprise de l'utilisateur, le produit sort de la fente ouverte à grande vitesse. Ainsi, lorsque ce dernier s'en aperçoit, et cesse d'appuyer sur le tube, une quantité trop importante de produit est déjà sortie du réservoir, ce qui rend difficile un dosage précis de produit. Quant à la fabrication de cette tête de distribution, la réalisation de la fente effectuée par découpe de la membrane nécessite la reprise de celle-ci sur un outillage supplémentaire, ce qui augmente considérablement le prix de revient de cette tête de distribution de l'art antérieur. En conséquence, une telle tête de distribution n'est pas appropriée aux produits de large diffusion, comme un shampooing ou un produit pour le nettoyage de la vaisselle, pour lesquels le prix de vente doit être modéré.

En conséquence, la présente invention a pour but, de fournir une tête de distribution et un ensemble pourvu de cette tête de distribution en réduisant la force d'appui nécessaire pour la distribution d'une dose de produit, tout en assurant le dosage du produit de manière souple et aisée, dès qu'une pression modérée est exercée sur le réservoir de l'ensemble. Ce but est atteint en réalisant une membrane à fente non jointive, obtenue notamment par une seule opération de moulage. La largeur de la fente est choisie en fonction de la viscosité du produit, de manière à empêcher sensiblement tout écoulement de produit sous l'effet de la gravité. Dans la pratique, on a remarqué que les fentes agissent comme moyen de rétention du produit par capillarité, autorisant de ce fait, le conditionnement de sensiblement tout produit de consistance liquide à visqueuse. La fabrication de cette tête de distribution est simple et extrêmement économique, et présente un fonctionnement fiable et une utilisation aisée.

La demanderesse a découvert, contrairement aux suggestions de l'homme du métier, qu'il n'est pas nécessaire, pour distribuer (ou retenir) un produit liquide ou visqueux, de disposer d'une fente élastique de sortie dont les bords sont jointifs.

Le document GB-A-773 761 décrit une capsule de fermeture d'un réservoir déformable qui est munie d'une membrane de fermeture sous forme de disque. Cette membrane comporte un petit orifice central duquel partent trois fentes qui s'étendent radialement vers le bord du disque de manière à définir des languettes qui se déforment sous la pression du produit, permettant ainsi la distribution du produit. Un élément rigide rapporté est monté à l'intérieur de la capsule de fermeture pour obturer de manière étanche les fentes et l'orifice central lorsque le produit n'exerce pas de pression sur la membrane.

Ainsi, la présente invention se rapporte à une tête de distribution telle que définie dans la revendication 1.

En général, la première position correspond à une position « tête en haut » et la seconde position à une position « tête en bas ».

Conformément à l'invention, les bords de la fente de sortie ne sont pas jointifs: Ceci peut être obtenu par moulage et non par découpe.

La demanderesse a découvert, de façon surprenante qu'en ajustant la distance entre les bords de la fente selon la viscosité du produit, il était possible d'obtenir un ensemble de distribution capable de réduire voire supprimer l'écoulement libre du produit par gravité, en position verticale, lorsque la tête de distribution est dirigée vers le bas. De plus, en réalisant la fente par moulage, la demanderesse a constaté qu'on pouvait réduire le prix de fabrication d'une tête de distribution à un tiers voire un quart, par rapport au prix de fabrication d'une tête de distribution de l'art antérieur, comportant une membrane à fente obtenue par découpe mécanique.

L'utilisation de la tête de distribution de l'invention est aisée car une pression modérée sur le réservoir est suffisante pour déclencher la distribution du produit. Après la distribution de produit, il se produit une reprise d'air via la fente assurant le remplacement du volume de liquide distribué, et l'écoulement du produit est coupé sans qu'il se produise de bavure. Ainsi le dosage de produit par l'utilisateur peut être effectué de manière souple et précise, contrairement à l'art antérieur.

En pratique, la capsule est formée d'un matériau thermoplastique rigide ou semi-rigide, par exemple de polyéthylène ou de polypropylène. Cette capsule est fixée, par exemple par vissage ou encliquetage sur un flacon formant réservoir pour le produit à distribuer. Avantageusement, ce flacon est semi-rigide ou souple, muni de parois compressibles, de sorte qu'une pression sur les parois du flacon déclenche la distribution du produit. De façon avantageuse, cette capsule est munie d'un canal de distribution fermé par l'organe élastique.

De préférence, cet organe élastique est une membrane en matériau élastomérique, et plus particulièrement en élastomère thermoplastique. Plus précisément, cette membrane est formée par un matériau souple ayant une mémoire de forme capable de reprendre, après déformation, sa forme initiale. Avantageusement ce matériau est choisi de sorte que la membrane puisse être moulée en une seule et unique pièce avec la capsule, par exemple par bi-injection. A cet effet, on choisit un élastomère physiquement et chimiquement compatible avec le matériau rigide de la capsule et capable de former une liaison solide, par thermofusion, avec le matériau rigide. Typiquement, la membrane est constituée, par exemple par les mélanges de polypropylène et de copolymères de bloc styrène - butadiène - styrène, de polypropylène et de copolymères de bloc styrène - éthylène - butylène - styrène, de polypropylène et de copolymères de bloc éthylène - propylène - diène.

De façon générale, la membrane se présente sous forme d'une rondelle. Il est cependant possible de la réaliser dans n'importe quelle forme. La surface de cette rondelle peut être plate, mais avantageusement, cette surface est bombée, par exemple concave ou convexe.

La fente pratiquée dans la membrane est située, de préférence, au centre de la rondelle ; cette fente constitue un orifice de distribution. Les bords de cette fente s'écartent l'un de l'autre, lorsque l'utilisateur exerce une pression sur le flacon retourné, tête en bas, pour provoquer la distribution d'une dose de produit. Grâce à l'élasticité de la membrane, la fente reprend sa forme d'origine, lorsque cesse la pression sur le flacon, puis l'écoulement du produit s'arrête.

La fente de la membrane peut être réalisée par moulage en vue de diminuer le coût de fabrication, lors de la fabrication de la capsule par bi-injection de la matière rigide ou semi-rigide formant la capsule, et puis de la matière élastomérique formant l'organe élastique. Typiquement, cette fente présente une longueur d'environ 0,2 cm à 2 cm. Selon l'invention, sa largeur est comprise dans la gamme comprise entre 0,05 mm à 1,0 mm, et de préférence entre 0,1 mm et 0,5 mm. Avantageusement, elle a une forme rectiligne. Le cas échéant, les bords de la fente peuvent être chanfreinés. Selon une forme préférée de l'invention, la membrane comporte deux fentes croisées formant, notamment, entre elles un angle droit. L'orientation de la fente ou des fentes peut être quelconque.

La capsule peut comporter, en outre, un couvercle rabattable apte à être placé sur l'organe élastique et destiné à assurer la protection de la membrane pendant le stockage du produit. Avantageusement, ce couvercle est articulé avec la capsule, de préférence à l'aide d'une charnière-film. Ceci permet le moulage intégral en une seule et unique pièce de la tête de distribution (capsule - charnière - couvercle - membrane avec la fente).

La face interne du couvercle peut comporter un ou plusieurs moyens d'étanchéité aptes à venir en appui sur l'organe élastique. Ainsi, cette face interne peut être munie d'un élément saillant en forme de croix, de forme complémentaire de celle des fentes croisées, apte à se plaquer, de façon étanche, au dessus des fentes, à proximité de leurs bords, pour éviter tout écoulement intempestif du produit lors du transport. De même, la face interne du couvercle peut comporter un bourrelet annulaire, apte à entourer la ou les fentes et se plaquer, de façon étanche, contre la membrane. Les deux moyens d'étanchéité peuvent être utilisés séparément ou équiper un même couvercle.

La tête de distribution conforme à l'invention est notamment destinée à équiper un ensemble de distribution, comportant un réservoir de produit de consistance liquide à visqueuse.

Un second objet de l'invention est constitué par un ensemble de distribution comportant un réservoir compressible contenant le produit de consistance liquide ou visqueuse à distribuer, sur ce réservoir étant fixée la tête de distribution décrite précédemment.

La viscosité de ce produit se situe en pratique dans la gamme allant de 0,8 Pa·s à 10 Pa·s, et plus particulièrement dans la gamme allant de 1,2 Pa·s à 8 Pa·s. Avantageusement, le produit se présente sous forme d'un gel. Ce gel est en particulier un shampooing, un gel douche, une crème faciale, un gel démaquillant ou amincissant.

L'invention a pour objet, également un procédé de fabrication d'une tête de distribution comportant un organe élastique tel que décrit précédemment ce procédé consistant à exécuter les étapes suivantes :
a) mouler dans un moule une capsule rigide par injection d'un premier matériau thermoplastique rigide
b) surinjecter l'organe élastique en un matériau élastomérique sur la capsule, le moule comportant des moyens pour réaliser ladite fente lors du moulage,
c) démouler la tête après refroidissement.
d) ladite tête de distribution (1) étant configurée de manière à permettre une reprise d'air dans un réservoir qu'elle est destinée à surmonter, via la fente (5), lors du retour des bords (6) en position initiale.

Pour mieux faire comprendre la présente invention, on va décrire maintenant, à titre d'exemples purement illustratifs et nullement limitatifs, plusieurs modes de réalisation d'un ensemble de distribution conforme à l'invention, représentés sur les dessins annexés.

La figure 1 représente une coupe axiale partielle de l'ensemble de distribution selon un premier mode de réalisation de l'invention, en position de stockage.

La figure 2 représente une coupe axiale partielle de l'ensemble de la figure 1 en position d'utilisation.

La figure 3 représente une vue en perspective de l'ensemble de la figure 1, le couvercle étant en position ouverte.

Les figures 4 à 9 représentent une coupe axiale partielle de différentes modes de réalisation de la membrane.

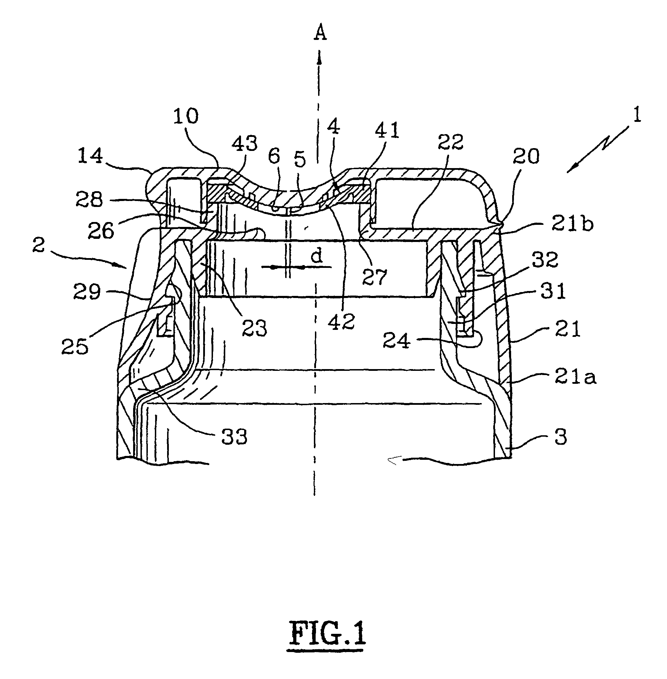

En référence aux figures 1 à 3, on peut voir la partie supérieure d'un récipient 3 formant réservoir pour un produit P, tel qu'un shampooing ayant, par exemple, une viscosité d'environ 3 Pa·s. Ce récipient est pourvu d'un axe de symétrie A. Il est compressible et formé, par exemple, par un matériau thermoplastique, tel que du polyéthylène. Ce récipient est pourvu d'un goulot 31 ouvert, de forme cylindrique, muni d'un bourrelet d'encliquetage 32. Une zone de transition entre le goulot et le récipient est formé par un épaulement 33.

Sur ce récipient est fixée, par encliquetage, une capsule de distribution 2 munie d'un couvercle 10 de protection rabattable et d'un organe élastique 4 de distribution, constituant un réducteur d'écoulement. Avantageusement le matériau constituant la capsule est un matériau thermoplastique relativement rigide, par exemple du polypropylène.

La capsule 2 comporte un corps 21 de forme générale cylindrique ou ovale, adapté à la forme du récipient et muni, du côté tourné vers le récipient, d'une extrémité inférieure 21a et, du côté opposé, d'une extrémité supérieure 21b.

L'extrémité inférieure 21a repose sur l'épaulement 33 du récipient. L'extrémité supérieure 21b est solidaire d'un plateau 22 de forme générale adaptée à celle du corps de la capsule. Ce plateau porte une première jupe cylindrique interne 23, s'étendant du côté du goulot et apte à s'engager, à friction, à l'intérieur de ce dernier. Une seconde jupe cylindrique externe 24, concentrique à la première et d'étendue plus importante que celle-ci, entoure, de façon étanche l'extérieur du goulot. Cette jupe 24 comporte une nervure annulaire 25 apte à coopérer avec le bourrelet 32 du goulot.

Le plateau 22 est pourvu d'une ouverture de distribution circulaire 26, excentrée par rapport à l'axe A. Le bord 27 de cette ouverture 26 est prolongée par une tubulure cylindrique 28 qui porte l'organe élastique 4, dirigée vers le couvercle 10.

L'organe élastique 4 a la forme générale d'un disque et comprend un renflement périphérique annulaire 41 et une membrane centrale 42 en forme de cuvette dont la concavité est tournée vers l'intérieur de la capsule. Le renflement périphérique a une épaisseur plus importante que la membrane centrale 42. Cet organe élastique est constitué par un matériau élastomérique thermoplastique, par exemple un mélange de polypropylène et de copolymères de bloc styrène - éthylène - butylène - styrène. Avantageusement, ce matériau présente une dureté Shore A comprise entre 30 et 60.

Le renflement périphérique 41 est rendu solidaire de la tubulure cylindrique 28 de la capsule, lors du moulage de la capsule par biinjection du matériau élastomérique formant l'organe élastique sur le matériau rigide formant la capsule. De façon générale, les deux matières et les conditions de moulage sont choisies de sorte qu'une liaison solide se forme, par thermofusion et ou/par liaison mécanique, entre la capsule et l'organe élastique.

Une zone de transition annulaire 43, délimitant le renflement périphérique 41 et la membrane centrale 42 et définissant une gorge annulaire présente une épaisseur réduite par rapport au reste de la membrane. Par cette disposition, on obtient une membrane centrale particulièrement flexible.

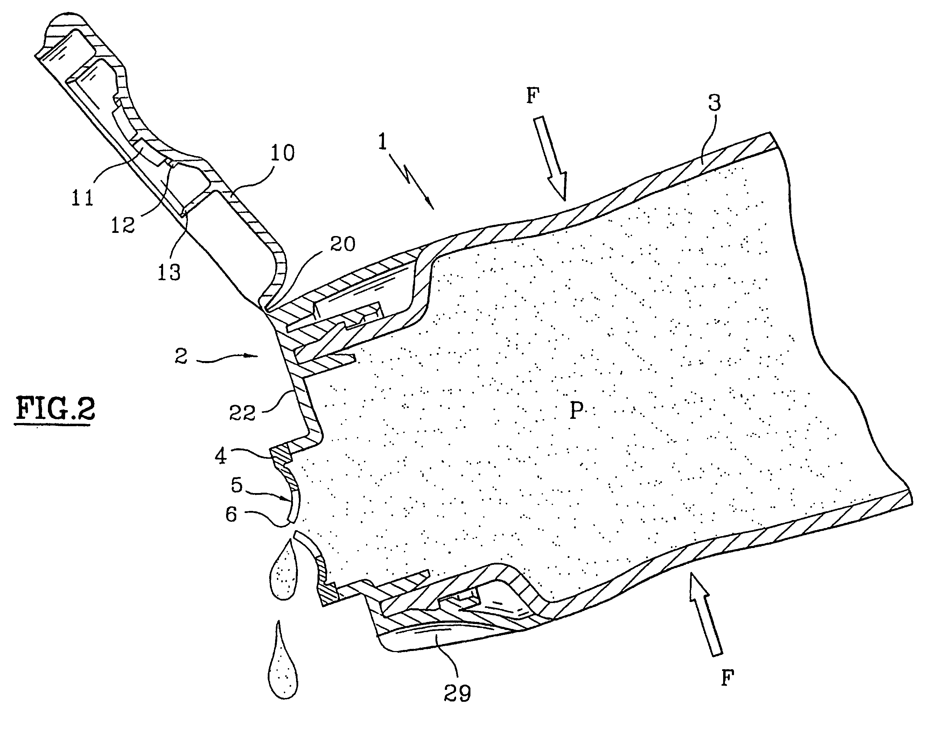

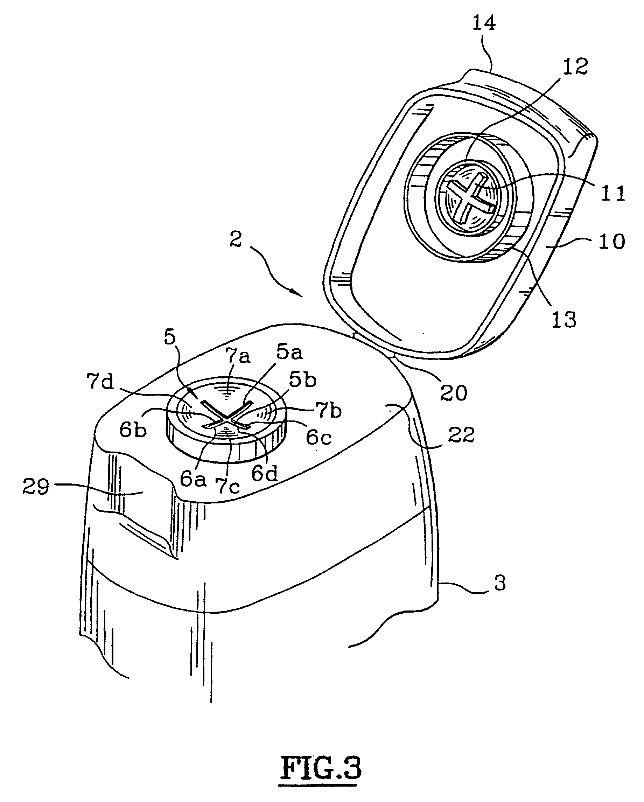

Dans la membrane centrale 42 sont pratiquées deux fentes croisées 5a, 5b (voir figure 3) à branches de longueur égale, formant entre elles un angle droit. Chaque fente 5a, 5b présente respectivement deux bords 6a, 6b ; 6c, 6d, parallèles l'un à l'autre, ces bords étant situés à une distance *d*, l'un de l'autre, d'environ 0,3 mm. Ainsi, les fentes définissent quatre secteurs 7a à 7d, aptes à fléchir vers l'extérieur de la capsule, comme représenté à la figure 2 (tête en bas), sous la poussée du produit. A cet effet, l'utilisateur maintient le récipient dans une position voisine à celle montrée à la figure 2, en exerçant une légère pression sur le récipient 3, symbolisée par les flèches F, pour distribuer une dose de produit P. La distribution s'arrête, lorsque cesse la pression sur le récipient. Même si le récipient est maintenu dans la position tête en bas, malgré le fait que les bords des fentes sont non jointifs, aucun écoulement de produit n'est observé.

La capsule 2 comporte, en outre, un évidement concave 29 (voir figures 1 et 3) en forme d'arc de cercle et, du côté opposé à cet évidement, une charnière-film 20, solidaire du plateau 22. A l'aide de cette charnière est articulé le couvercle 10, apte à empêcher, en position de fermeture, un écoulement accidentel du produit P, par exemple lors du transport de l'ensemble. A cet effet, le couvercle, de forme complémentaire à celle du plateau 22, comporte des moyens d'étanchéité. Ces moyens comprennent une excroissance 11 en forme d'une croix, dont les dimensions sont choisis pour couvrir entièrement les fentes 5a, 5b. Cette croix 11 est entourée par un bourrelet annulaire 12 destiné à se placer, de façon étanche, en position de fermeture, sur la membrane 5 de façon à entourer les fentes 5a, 5b. Une jupe cylindrique 13, concentrique au bourrelet 12, est prévue pour se placer, en position de fermeture, autour de la tubulure 28, de façon étanche, le renflement périphérique 41 de la membrane, venant en contact intime contre la face interne de cette jupe 13.

Le couvercle 10 comporte, de plus, une protubérance 14, située en face de l'évidement 29, comme visible sur la figure 1. Cette protubérance, en combinaison avec l'évidement 29, constitue une zone d'appui facilitant l'ouverture du couvercle.

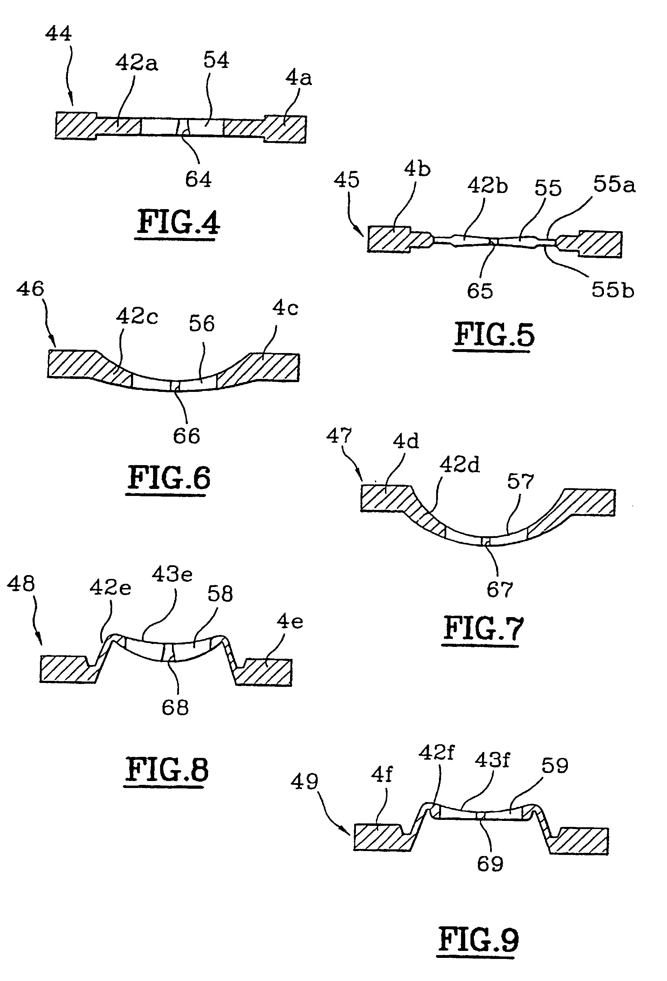

Les figures 4 à 9 représentent différentes variantes de réalisation de l'organe élastique, portant les références 44 à 49. Pour plus de clarté, ces organes sont représentés de façon individuelle. Il est bien entendu qu'ils sont solidaires de la tubulure 28 de la capsule.

La figure 4 montre, en coupe longitudinale, une variante d'organe élastique 44, utilisable pour la distribution de produits fluides. Cet organe est pourvu d'un renflement périphérique 4a d'épaisseur légèrement supérieure à celle de la membrane centrale 42a. La membrane 42a est plane et munie de deux fentes 54 en forme de croix dont les bords 64 sont chanfreinés, en s'évasant vers l'intérieur de la capsule.

La figure 5 montre, en coupe longitudinale, une autre variante d'organe élastique 45, utilisable pour la distribution de produits de viscosité moyenne, par exemple d'environ 1 à 3 Pa-s. L'organe est pourvu d'un renflement périphérique 4b d'épaisseur nettement supérieure à celle de la membrane centrale 42b. La membrane 42b est plane et munie de deux fentes 55 en forme de croix dont les bords 65 sont parallèles. Une zone annulaire 55a, 55b d'épaisseur plus mince que le reste de la membrane 42b est prévue sur chaque face de la membrane, conférant, lors de la distribution du produit, de la souplesse à l'utilisation. Ces zones 55a, 55b jouent le même rôle que la gorge 43 de la figure 1.

La figure 6 montre, en coupe longitudinale, une variante d'organe élastique 46, utilisable pour la distribution de produits très visqueux à des doses importantes. L'organe est pourvu d'un renflement périphérique 4c dont l'épaisseur diminue fortement vers la membrane centrale 42c. La membrane 42c est bombée vers l'intérieur de la capsule et munie de deux fentes 56 en forme de croix dont les bords 66 sont parallèles.

La figure 7 montre, en coupe longitudinale, une variante d'organe élastique 47, utilisable pour la distribution de produits très visqueux. Cet organe se distingue de celui de la figure 6 par une concavité plus importante de la membrane centrale 42d. Les références 57 et 67 indiquent respectivement les fentes en croix et leurs bords.

La figure 8 montre, en coupe longitudinale, une variante d'organe élastique 48, utilisable pour la distribution de produits de viscosité moyenne d'environ 3 à 5 Pa-s et permettant un dosage fin du produit. Cet organe est pourvu d'un renflement périphérique 4e solidaire d'une membrane centrale 42e en forme de chapeau dont la calotte émerge de la capsule. Cette membrane est pourvue d'une zone centrale 43e concave dans laquelle sont pratiquées deux fentes 58 en forme de croix dont les bords 68 sont parallèles. L'épaisseur de cette zone centrale augmente progressivement de la périphérie vers le centre. Une gorge annulaire délimite les flancs de la membrane 42e.

La figure 9 montre, en coupe longitudinale, une variante d'organe élastique 49, utilisable pour la distribution de produits peu visqueux et permettant un dosage fin du produit. Cet organe est pourvu d'un renflement périphérique 4f auquel est raccordée la membrane centrale 42f en forme de chapeau, dont l'épaisseur est plus faible que celle du renflement périphérique 4f. Cette membrane est pourvue d'une zone centrale 43f d'épaisseur plus importante que celle du chapeau, l'épaisseur de cette zone diminuant vers son centre. Cette zone 43f a une forme concave.

De façon générale, les fentes 54 à 59 ont une largeur situés dans la gamme allant de 0,05 à 1,0 mm. Cette largeur est choisie en fonction de la viscosité du produit à distribuer.

### ESSAI COMPARATIF

Comparaison du débit de distribution entre une tête de distribution munie d'une membrane à fentes jointives et une tête de distribution munie d'une membrane à fentes non jointives.

Deux réservoirs équipés chacun d'une tête de distribution munie d'une membrane à fente ont été remplis d'un même produit (shampooing). A part la fente de la membrane, les deux ensembles sont identiques.

Une première membrane A présentant sensiblement la forme de la membrane 4 sur la figure 1 a été pourvue de deux fentes croisées formant entre elles un angle de 90°. La membrane A a été fixée sur une première tête de distribution ci-dessus. La membrane A a été obtenue par moulage d'un matériau élastomérique, les fentes ayant été réalisées lors du moulage, de sorte que les bords parallèles de chaque fente sont distants l'un de l'autre de 0,5 mm.

Une seconde membrane B présente la même géométrie externe que la membrane A. La membrane B comporte deux fentes croisées configurées comme celles de la membrane A, à l'exception près que les bords de chaque fente sont jointifs. La membrane B est moulée en même matériau que la membrane A, la découpe des fentes de la membrane B étant effectuée par un outil tranchant.

Pour mesurer la dose de produit distribué de chaque tête de distribution, on exerce 9 pressions à 5 10⁴ Pa sur le réservoir à intervalles réguliers pendant 1 seconde. Le résultat a été transcrit dans le tableau ci-dessous :

| **membrane** | **A** | **B** |
|---|---|---|
| | | |
| **poids total (g)** | **28,76** | **11,12** |
| | | |
| **poids/dose (g)** | **3,19** | **1,24** |

On constate que pour une pression identique et une longueur de fente constante, la membrane à fentes non jointives permet une distribution de produit largement supérieure à la distribution d'une membrane à fentes jointives (2,6 fois supérieur).

## Revendications

1. Tête de distribution (1) d'un produit (P) liquide comportant une capsule rigide (2) et un organe élastique (4, 44 à 49) réducteur d'écoulement solidaire de la capsule (2), muni d'au moins une fente (5, 5a, 5b, 54 à 59) pourvue de bords (6a à 6d) aptes à s'écarter sous la poussée du produit (P) sous l'action de l'utilisateur et à revenir dans une position initiale lorsque cesse cette poussée, dans la position initiale, les bords (6) de la fente (5) étant non jointifs et disposés l'un de l'autre à une distance *(d)* de manière à délimiter une ouverture **caractérisée en ce qu'**au travers de l'ouverture le produit ne peut pas s'écouler par gravité, ladite tête de distribution (1) étant configurée de manière à permettre une reprise d'air dans un réservoir qu'elle est destinée à surmonter, via la fente (5), lors du retour des bords (6) en position initiale.

2. Tête de distribution selon la revendication 1, **caractérisée en ce que** les bords (6) de la fente (5) sont obtenus de moulage.

3. Tête de distribution selon la revendication 1 ou 2, **caractérisée en ce que** l'organe élastique (4) est une membrane en matériau élastomérique.

4. Tête de distribution selon l'une des revendications 1 à 3, **caractérisée en ce que** l'organe élastique (4) présente une forme bombée.

5. Tête de distribution selon l'une des revendications précédentes, **caractérisée en ce que** l'organe élastique (4) et la capsule rigide (2) forment une seule et même pièce.

6. Tête de distribution selon l'une des revendications précédentes, **caractérisée en ce que** l'organe élastique (4) est formé d'un premier matériau élastomérique thermoplastique.

7. Tête de distribution selon la revendication précédente, **caractérisée en ce que** la capsule (2) est formé d'un second matériau thermoplastique rigide ou semi-rigide.

8. Tête de distribution selon l'une des revendications 6 et 7, **caractérisée en ce que** les premier et second matériaux sont aptes à former une liaison mécanique entre eux, par thermofusion.

9. Tête de distribution selon l'une des revendications précédentes, **caractérisée en ce que** la fente (5) est rectiligne.

10. Tête de distribution selon l'une des revendications 1 à 9, **caractérisée en ce que** la fente (5) est en forme de croix.

11. Tête de distribution selon l'une des revendications précédentes, **caractérisée en ce que** la distance (*d*) entre les bords (6) de la fente (5) est comprise dans la gamme allant de 0.05 mm à 1,0 mm.

12. Tête de distribution selon l'une des revendications précédentes, **caractérisée en ce que** les bords (6) de la fente (5) sont chanfreinés.

13. Tête de distribution selon l'une des revendications précédentes, **caractérisée en ce que** la capsule (2) est muni d'un couvercle (10) articulé apte à être placé sur l'organe élastique (4).

14. Tête de distribution selon la revendication 13, **caractérisée en ce que** le couvercle (10) comporte au moins un moyen d'étanchéité (11, 12, 13) apte à venir en appui sur l'organe élastique (4).

15. Tête de distribution selon la revendication 14, **caractérisée en ce que** le moyen d'étanchéité (12) comprend un bourrelet périphérique entourant la fente (5).

16. Tête de distribution selon la revendication 14 ou 15, **caractérisée en ce que** le moyen d'étanchéité comprend un élément (11) apte à se plaquer contre les bords (6) de la fente (5).

17. Tête de distribution selon la revendication 16, **caractérisée en ce que** l'élément (11) a une forme complémentaire de celle de la fente.

18. Ensemble de distribution comportant un réservoir (3) compressible contenant un produit (P) liquide à distribuer et une tête de distribution (1) fixée sur le réservoir (3), **caractérisé en ce que** la tête de distribution (1) est conforme à l'une quelconque des revendications précédentes.

19. Ensemble selon la revendication 18, **caractérisé en ce que** le produit (P) a une viscosité située dans la gamme allant de 0,6 Pa·s à 10 Pa·s.

20. Ensemble selon la revendication 18 ou 19, **caractérisé en ce que** le produit (P) a une viscosité située dans la gamme allant de 1,2 Pa·s à 8 Pa·s.

21. Ensemble selon l'une des revendications 18 à 20, **caractérisé en ce que** le produit (P) se présente sous forme d'un gel.

22. Procédé de fabrication d'une tête de distribution (1) comportant un organe élastique (4, 44 à 49) pourvu d'une fente comportant des bord parallèles non-jointifs, et situés l'un de l'autre à une distance *(d)*, conforme à l'une quelconque des revendications 1 à 17, **caractérisé par** les étapes suivantes :
a) mouler dans un moule une capsule rigide par injection d'un premier matériau thermoplastique rigide,
b) surinjecter l'organe élastique en un matériau élastomérique sur la capsule, le moule comportant des moyens pour réaliser ladite fente lors du moulage,
c) démouler la tête après refroidissement,
d) ladite tête de distribution (1) étant configurée de manière à permettre une reprise d'air dans un réservoir qu'elle est destinée à surmonter via la fente (5), lors du retour des bords (6) en position initiale.

## Claims

1. Head (1) for dispensing a liquid product (P) comprising a rigid cap (2) and an elastic flow-reducing member (4, 44 to 49) secured to the cap (2), the member being provided with at least one slit (5, 5a, 5b, 54 to 59) with edges (6a to 6d) able to part under the thrust of the product (P) under the action of the user and to return to an initial position when this thrust ceases, in the initial position, the edges (6) of the slit (5) being non-contiguous and arranged a distance (d) apart so as to delimit an opening, **characterized in that** the product cannot flow under gravity through the opening, the said dispensing head (1) being configured in such a way as to allow air to be taken into a reservoir that it is intended to surmount, via the slit (5) as the edges (6) return to the initial position.

2. Dispensing head according to Claim 1, **characterized in that** the edges (6) of the slit (5) are obtained by moulding.

3. Dispensing head according to Claim 1 or 2, **characterized in that** the elastic member (4) is a diaphragm made of elastomeric material.

4. Dispensing head according to one of Claims 1 to 3, **characterized in that** the elastic member (4) has a domed shape.

5. Dispensing head according to one of the preceding claims, **characterized in that** the elastic member (4) and the rigid cap (2) form one single piece.

6. Dispensing head according to one of the preceding claims, **characterized in that** the elastic member (4) is formed of a first, elastomeric, thermoplastic material.

7. Dispensing head according to the preceding claim, **characterized in that** the cap (2) is formed of a second, rigid, or semi-rigid thermoplastic material.

8. Dispensing head according to one of Claims 6 and 7, **characterized in that** the first and second materials are able to form a mechanical bond with each other by hot melting.

9. Dispensing head according to one of the preceding claims, **characterized in that** the slit (5) is straight.

10. Dispensing head according to one of Claims 1 to 9, **characterized in that** the slit (5) is cross-shaped.

11. Dispensing head according to one of the preceding claims, **characterized in that** the distance (d) between the edges (6) of the slit (5) is in the range from 0.05 mm to 1.0 mm.

12. Dispensing head according to one of the preceding claims, **characterized in that** the edges (6) of the slit (5) are chamfered.

13. Dispensing head according to one of the preceding claims, **characterized in that** the cap (2) is fitted with a hinged lid (10) able to be placed over the elastic member (4).

14. Dispensing head according to Claim 13, **characterized in that** the lid (10) comprises at least one sealing means (11, 12, 13) able to rest against the elastic member (4).

15. Dispensing head according to Claim 14, **characterized in that** the sealing means (12) comprises a peripheral bulge surrounding the slit (5).

16. Dispensing head according to Claim 14 or 15, **characterized in that** the sealing means comprises an element (11) able to be pressed against the edges (6) of the slit (5).

17. Dispensing head according to Claim 16, **characterized in that** the element (11) has a shape that complements that of the slit.

18. Dispensing assembly comprising a compressible reservoir (3) containing a liquid product (P) to be dispensed and a dispensing head (1) fixed to the reservoir (3), **characterized in that** the dispensing head (1) is in accordance with any one of the preceding claims.

19. Assembly according to Claim 18, **characterized in that** the product (P) has a viscosity in the range from 0.6 Pa s to 10 Pa s.

20. Assembly according to Claim 18 or 19, **characterized in that** the product (P) has a viscosity in the range from 1.2 Pa s to 8 Pa s.

21. Assembly according to one of Claims 18 to 20, **characterized in that** the product (P) is in the form of a gel.

22. Method for producing a dispensing head (1) comprising an elastic member (4, 44 to 49) provided with a slit with non-contiguous parallel edges situated a distance (d) apart, in accordance with any one of Claims 1 to 17, **characterized by** the following steps:
a) using a mould to mould a rigid cap by injecting a first, rigid, thermoplastic material,
b) injection-overmoulding the elastic member made of elastomeric material over the cap, the mould comprising means for producing the said slit at the time of moulding,
c) releasing the head from the mould once it has cooled,
d) the said dispensing head (1) being configured in such a way as to allow air to be taken into a reservoir that it is intended to surmount, via the slit (5) as the edges (6) return to the initial position.

## Patentansprüche

1. Ausgabekopf (1) für ein flüssigen Produkt (P), der eine steife Kapsel (2) und ein fest mit der Kapsel (2) verbundenes elastisches Organ (4, 44 bis 49) zur Ausflußbegrenzung aufweist, das mit mindestens einem Schlitz (5, 5a, 5b, 54 bis 59) versehen ist, der Ränder (6a bis 6d) aufweist, die sich durch Einwirkung durch den Benutzer unter dem Druck des Produkts (P) auseinander spreizen und in eine Ursprungsstellung zurückkommen, wenn dieser Druck endet, wobei die Ränder (6) des Schlitzes (5) in der Ursprungsstellung nicht aneinander liegen und einen Abstand (d) zueinander aufweisen, um eine Öffnung zu definieren, **dadurch gekennzeichnet, daß** das Produkt nicht durch Schwerkraftwirkung durch die Öffnung fließen kann, wobei der Ausgabekopf (1) so gestaltet ist, daß er bei der Rückkehr der Ränder (6) in ihr Ursprungsstellung eine Luftaufnahme durch den Schlitz (5) in ein Gefäß erlaubt, auf das er aufgesetzt werden soll.

2. Ausgabekopf nach Anspruch 1, **dadurch gekennzeichnet, daß** die Ränder (6) des Schlitzes (5) durch Formen erhalten werden.

3. Ausgabekopf nach Anspruch 1 oder 2, **dadurch gekennzeichnet, daß** das elastische Organ (4) eine Membran aus Elastomermaterial ist.

4. Ausgabekopf nach einem der Ansprüche 1 bis 3, **dadurch gekennzeichnet, daß** das elastische Organ (4) eine gewölbte Form aufweist.

5. Ausgabekopf nach einem der vorhergehenden Ansprüche, **dadurch gekennzeichnet, daß** das elastische Organ (4) und die steife Kapsel (2) aus einem Stück bestehen.

6. Ausgabekopf nach einem der vorhergehenden Ansprüche, **dadurch gekennzeichnet, daß** das elastische Organ (4) aus einem ersten thermoplastischen Elastomermaterial besteht.

7. Ausgabekopf nach dem vorhergehenden Anspruch, **dadurch gekennzeichnet, daß** die Kapsel (2) aus einem zweiten steifen oder halbsteifen thermoplastischen Material besteht.

8. Ausgabekopf nach einem der Ansprüche 6 und 7, **dadurch gekennzeichnet, daß** das erste und das zweite Material durch Wärmeschmelzen eine mechanische Verbindung miteinander bilden können.

9. Ausgabekopf nach einem der vorhergehenden Ansprüche, **dadurch gekennzeichnet, daß** der Schlitz (5) geradlinig ist.

10. Ausgabekopf nach einem der Ansprüche 1 bis 9, **dadurch gekennzeichnet, daß** der Schlitz (5) kreuzförmig ist.

11. Ausgabekopf nach einem der vorhergehenden Ansprüche, **dadurch gekennzeichnet, daß** der Abstand (d) zwischen den Rändern (6) des Schlitzes (5) im Bereich zwischen 0,05 mm und 1,0 mm liegt.

12. Ausgabekopf nach einem der vorhergehenden Ansprüche, **dadurch gekennzeichnet, daß** die Ränder (6) des Schlitzes (5) abgeschrägt sind.

13. Ausgabekopf nach einem der vorhergehenden Ansprüche, **dadurch gekennzeichnet, daß** die Kapsel (2) mit einem angelenkten Deckel (10) versehen ist, der auf dem elastische Organ (4) angeordnet werden kann.

14. Ausgabekopf nach Anspruch 13, **dadurch gekennzeichnet, daß** der Deckel (10) mindestens ein Dichtmittel (11, 12, 13) aufweist, das auf das elastische Organ (4) in Auflage kommen kann.

15. Ausgabekopf nach Anspruch 14, **dadurch gekennzeichnet, daß** das Dichtmittel (12) einen Umfangswulst aufweist, der den Schlitz (5) umgibt.

16. Ausgabekopf nach Anspruch 14 oder 15, **dadurch gekennzeichnet, daß** das Dichtmittel ein Element (11) aufweist, das sich gegen die Ränder (6) des Schlitzes (5) legen kann.

17. Ausgabekopf nach Anspruch 16, **dadurch gekennzeichnet, daß** das Element (11) eine zur Form des Schlitzes komplementäre Form hat.

18. Ausgabeeinheit, die ein zusammendrückbares Gefäß (3), das ein flüssiges auszugebendes Produkt (P) enthält, und einen Ausgabekopf (1) aufweist, der auf dem Gefäß (3) befestigt ist, **dadurch gekennzeichnet, daß** der Ausgabekopf (1) nach einem der vorhergehenden Ansprüche gestaltet ist.

19. Einheit nach Anspruch 18, **dadurch gekennzeichnet, daß** das Produkt (P) eine Viskosität aufweist, die im Bereich von 0,6 Pa.s bis 10 Pa.s liegt.

20. Einheit nach Anspruch 18 oder 19, **dadurch gekennzeichnet, daß** das Produkt (P) eine Viskosität aufweist, die im Bereich von 1,2 Pa.s bis 8 Pa.s liegt.

21. Einheit nach einem der Ansprüche 18 bis 20, **dadurch gekennzeichnet, daß** das Produkt (P) in Form eines Gels vorliegt.

22. Verfahren zur Herstellung eines Ausgabekopfes (1), der ein elastisches Organ (4, 44 bis 49) aufweist, das mit einem Schlitz versehen ist, der nicht aneinander liegende, parallele Ränder hat, die einen Abstand (d) zueinander aufweisen, gemäß einem der Ansprüche 1 bis 17, **gekennzeichnet durch** die folgenden Schritte:
a) Formen einer steifen Kapsel **durch** Injektion eines ersten, steifen thermoplastischen Materials in eine Form,
b) Überspritzen des elastischen Organs aus einem Elastomermaterial auf die Kapsel, wobei die Form Mittel aufweist, um den Schlitz beim Formen herzustellen,
c) Entformen des Kopfes nach dem Abkühlen,
d) wobei der Ausgabekopf (1) so gestaltet ist, daß er bei der Rückkehr der Ränder (6) in ihre Ursprungsstellung eine Luftaufnahme **durch** den Schlitz (5) in ein Gefäß erlaubt, auf das er aufgesetzt werden soll.
